# EUROPEAN PATENT SPECIFICATION

(11) **EP 1 198 663 B1**
(45) Date of publication and mention of the grant of the patent: **09.02.2005**
(21) Application number: 99929603.1
(22) Date of filing: 07.07.1999
(51) Int. Cl.: F02C 6/20, F02C 7/36, F02C 3/055, F02C 6/14, B63H 21/20, F01D 15/10, F01D 15/04, F01D 15/12

(54) **HIGH-PRESSURE GAS-TURBINE PLANT USING HIGH-PRESSURE PISTON-TYPE COMPRESSOR**
HOCHDRUCKGASTURBINENAGGREGAT MIT HOCHDRUCKKOLBENKOMPRESSOR
GROUPE PROPULSEUR A TURBINE A GAZ HAUTE PRESSION EMPLOYANT UN COMPRESSEUR A PISTONS HAUTE PRESSION

(43) Date of publication of application: 24.04.2002
(73) Proprietor: Boric, Miroslav, Split, 21000 (HR)
(72) Inventor: Boric, Miroslav, Split, 21000 (HR)
(74) Representative: Lieck, Hans-Peter, Dipl.-Ing.
(86) International application number: PCT/HR1999/000013
(87) International publication number: WO 2001/004477

(56) References cited:
- EP-A1- 0 593 793
- DE-A1- 3 837 736
- US-A- 3 990 242
- US-A- 4 369 630

## Description

The present invention relates to a gas-turbine power plant according to the pre-characterizing clause of claim 1.

Classical gas-turbine power plants have a turbo-type compressor and operate with a voluminous flow at a relatively low pressure. Since, accordingly, they have a relatively low efficiency degree, classical gas turbines have never got widely applied except in aircrafts, Navy vessels and emergency power plants where economy is not a priority. E.g. in marine applications they cannot compete with Diesel engines which are the most common source of marine power.

US-A 4,369,630 discloses a classic gas-turbine plant combined with a Diesel engine to power a marine vessel. The Diesel engine is used to provide power in most cruising situations. When greater power is required, the Diesel engine is disengaged and the gas-turbine plant is engaged. When maximum power is needed, the Diesel engine is used to run a compressor to supercharge the air consumed by the gas turbine prior to its entry into the latter. Nevertheless, the gas turbine still uses its turbo-type compressor for compressing its combustion air.

US-A 4,864,812 discloses a power unit combining auxiliary power unit and emergency power unit functions by providing a pair of turbine wheels and a pair of motion transmitting paths each including a selectively operable clutch connecting the turbine wheels to a gearbox. A turbo-type compressor is connected to one of the turbine wheels, whereas an oxidant-containing pressure tank and associated combustor supplies combustion gas to the other turbine wheel. Using the first turbine wheel, the unit can operate in an air-breathing mode as an auxiliary power unit. Using the second turbine wheel and its pressurized oxidant instead of the first turbine wheel, the unit can operate as an emergency power unit.

Neither of the above references addresses the low efficiency of a gas-turbine power plant employing a turbo-type air compressor.

This in mind, the present invention is to solve the problem of providing a gas-turbine power plant having a higher degree of efficiency, and, accordingly, being useful for additional applications such as in ordinary marine vessels or in rail traffic.

This problem is solved, according to the invention, by a gas-turbine power plant comprising the features of claim 1. Additional improvements and elaborations are laid down in the dependent claims.

By employing a piston-type compressor instead of a turbo-type compressor for pressurizing the combustion air for the gas turbine, higher pressurized combustion gases and, accordingly, a more efficient gas-turbine power plant can be obtained. Such a gas-turbine power plant is suitable, e.g., to replace a Diesel engine in many applications, such as in marine vessels.

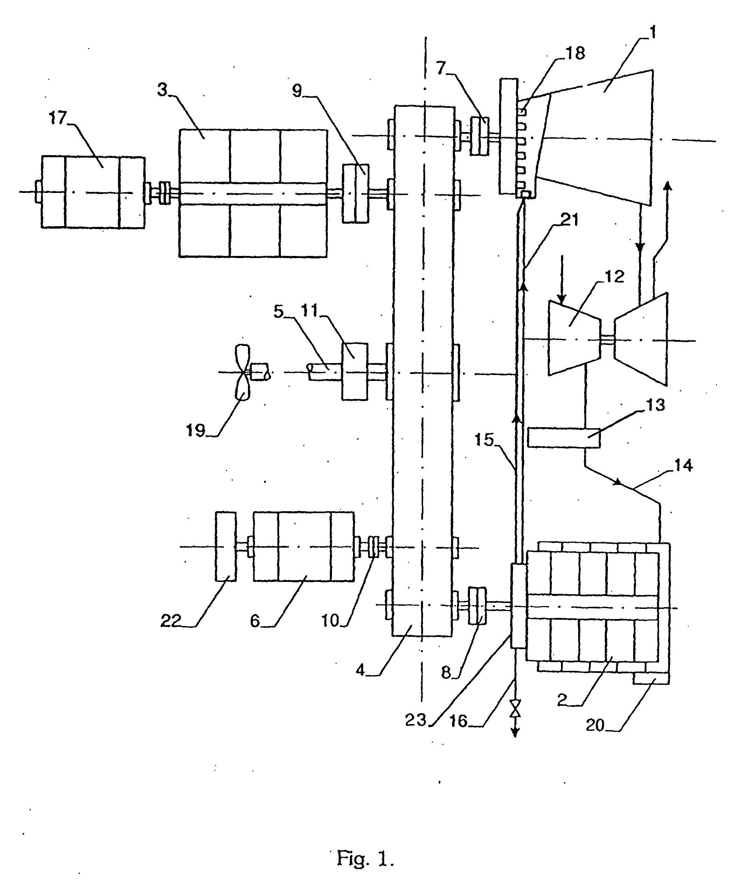

In the following, a preferable embodiment of the invention is described in detail, taking reference to the accompanying drawing. The single figure of this drawing schematically shows a gas-turbine power plant according to the invention in the form of a block diagram.

The gas-turbine power plant as shown comprises a gas turbine 1 suitably designed to sustain a relatively high pressure. The gas turbine 1 includes a plurality of combustion chambers 18 for supplying the required combustion gas. The combustion chambers 18 are fed with compressed air by a piston-type compressor 2 mechanically connected to the gas turbine 1 either directly or - as shown - indirectly through a gearbox 4. The compressor 2 has a plurality of cylinders, each of which is connected by a corresponding number of high-pressure pipes 15 to the combustion chambers 18. Preferably, there are as many combustion chambers 18 as there are cylinders in the compressor 2.and each combustion chamber 18 is preferably supplied through a high-pressure pipe 15 of its own. Further, each combustion chamber 18 is preferably provided with a fuel valve having a combustion stimulator as this is disclosed in EP 0 593 793 B1.

The compressor 2 is a single-stage, single-acting piston-type. compressor the cylinders of which may be arranged in a "V" or any other compact design. Preferably, the compressor 2 is a four-stroke Diesel engine modified to operate as a compressor - an easy task for every person skilled in the art of Diesel engines. It is equipped with a valve camshaft driven by a crankshaft at a rotation speed ratio 1:1 and, further, with intake and output valves located in the cylinder covers. Valve opening and closing is controlled by the valve camshaft, as with Diesel engines, according to a given cam timing. The compressor 2 may include a rotation speed regulator such as a WOODWOORD® device, and safety valves may be located in the cylinder covers. Further, the compressor may have compression relief devices as they are used to aid in starting of Diesel engines, and, as shown, it may have an outlet 16 for ship service air, and a control stand 20 allowing to control the entire plant.

Finally, any such modified Diesel engine compressor will have a fuel pump, 23, including cam-operated pistons which can advantageously be used to supply high-pressure fuel through fuel pipes 21 to the individual combustion chambers 18, that is to the aforementioned fuel valves thereof.

Preferably also, as shown, the so far described gas-turbine power plant includes a turbocharger 12 having a low-pressure turbo-compressor that takes air from the atmosphere, compresses it and supplies it, by pipes 14, through an air cooler 13 to the piston-type compressor 2. The turbocharger 12 is driven by exhaust gas from the gas turbine 1.

An engine 3, such as a Diesel engine, is used for starting the. plant. In the case as shown, the engine 3 has an auxiliary electric generator 17 generating electricity as.for a ship and for plant requirements connected to one end and a shaft-coupling clutch 9 at the other, connecting it to the gearbox 4. The engine 3 is for starting the plant. However, when the plant got started; the engine 3 can be uncoupled from the gearbox 4 and employed for driving the generator 17. Where the engine 3 is powerful enough, it can also act as a spare propulsion drive in an emergency case.

The engine 3 can principally be an electric, hydraulic, pneumatic or Diesel engine.

In the embodiment as shown, the gearbox 4 is used to mechanically connect the gas turbine 1, the compressor 2, the engine 3, a power output shaft 5 and an electric power generator 6. Accordingly, gearbox 4 includes a gear connected to the gas turbine 1, a gear for taking power from the engine 3, a gear for driving the piston-type compressor 2, a gear for driving the power output shaft 5, and a gear for driving the power generator 6.

Power output shaft 5, where employed for ship propulsion, is supported by a thrust bearing 11 and connected to a propulsion propeller 19 which may have movable blades. Alternatively, it may be used for driving, e.g., another generator.

In the case as shown, power generator 6 is connected at one end, through a kinetic shaft clutch 10, to the gearbox 4, and at the other end to a frequency stabilizing flywheel 22. On the other hand, generator 6 could be replaced with another piston-type compressor, such as 2, to increase the air supply to the gas turbine 1.

Shaft-coupling clutches 7, 8 and 9, which couple the gas turbine 1, the compressor 2 and the engine 3 to the gearbox 4, can selectively be engaged or disengaged. They can be hydraulic, electromagnetic or pneumatic. The kinetic shaft clutch 10 is preferable pneumatic or electromagnetic.

The high-pressure gas-turbine plant of the present invention, as so far described, functions as follows:

### INITIAL STARTING

The plant is initially started from rest by means of the engine 3. The generator 17 will then be switched off the network. After starting of the engine 3, the shaft-coupling clutches 7, 8 and 9 are engaged whereas the shaft coupling clutch 10 is disengaged. By means of the gearbox 4 the gas turbine 1, the compressor 2 and the power output shaft 5 are started simultaneously. operation of the compressor 2 pumps air drawn from the atmosphere through the turbocharger 12 compressor and the air cooler 13 into the piston-type compressor 2 from where it is fed in compressed form to the combustion Chambers 18 of the gas turbine 1. Still, the combustion chambers 18 are not yet active at this time. The compressed air then having passed through the gas turbine 1 drives the turbocharger 12 turbine that drives the turbocharger compressor for low-pressure compression of the air supplied to compressor 2. This idle operation can last for a longer period of time.

### STEADY OPERATION

By having the fuel pump 23 on compressor 2 feed high-pressure fuel into the combustion chambers 18, combustion therein is started. The combustion gas thereby produced expands through the gas turbine 1, and the fuel energy is transformed into mechanical power by rotation of the gas turbine 1 rotor. Upon leaving the gas turbine 1, the combustion gases drive the turbocharger 12 gas turbine which drives the turbocharger compressor. Having left the turbocharger gas turbine, the combustion gases may pass through an economizer and then exit into the atmosphere.

Driven by the turbocharger 12 turbine, the turbocharger compressor takes air from the atmosphere, compresses it and supplies it through the air cooler 13 to the compressor 2 where it is further compressed and then fed into the combustion chambers 18 of the gas turbine 1. In the combustion chambers 18 the fuel supplied through the fuel pipes 21 is ignited, preferably aided by a combustion stimulator to increase efficiency of the plant.

After the start the engine 3 is disengaged from the gearbox 4 whereupon generator 17 can be connected to its network.

As long as fuel is supplied to the combustion chambers 18, the gas turbine 1 continues to run and to produce power to drive the compressor 2 and the power output shaft 5 and/or the power generator 6 by means of the gearbox 4.

Rotation and production of power in the gas turbine 1 is modified by changing the charging of the fuel pump 23 from the control stand 20. That is, the entire plant can be controlled manually or automatically from the control stand 20. Power and rotation stabilization of the propeller 19 can be obtained by a known rotation and power regulator, such as a WOODWOORD® device.

While e.g., a ship is under way, low-cost electricity can be produced by driving the power generator 6 through the kinetic shaft clutch 10. The flywheel 22 connected to the generator 6 is to stabilize the frequency of the produced electricity in conditions such as storm, pitching or the like.

The engine 3, such as a Diesel engine, and the generator 17 can produce electricity when the ship is in port or under way, with the shaft-coupling clutch 9 disengaged. As the case may be, the engine 3 can also be used for emergency propulsion. In such a case the clutches 7, 8 and 10 are disengaged whereas clutch 9 is engaged. Meanwhile the generator 17 will be switched off the network.

Replacing the typical turbo-type compressor of a conventional gas-turbine power plant with a high-pressure piston-type compressor', the present invention improves the efficiency of a gas-turbine power plant, enabling it to be more broadly used as, e.g., in marine vessels. A piston-type compressor as used in the invention can be produced at relatively low cost, particularly by modifying a Diesel engine. A high-pressure gas-turbine power plant according to the invention can produce high power in a single block and with relatively high efficiency, due to high adiabatic fall, lower air/combustion gas flow speeds and, accordingly, lower friction resistance and lower rotation speed. Additionally, it can be lighter and quieter.

## Claims

1. A gas-turbine power plant comprising:
- a gas turbine (1) having a plurality of combustion chambers (18),
- an air compressor mechanically connected to said gas turbine (1) for supplying pressurized combustion air to said combustion chambers (18), and
- a fuel source for supplying fuel to said combustion chambers (18),
**characterized in that** said air compressor is a piston-type compressor (2).

2. The gas-turbine power plant of claim 1, wherein said piston-type compressor (2) has a plurality of cylinders separately connected to one combustion chamber (18) each of said gas turbine (1).

3. The gas-turbine power plant of claim 1 or 2, wherein said fuel source is a piston-type fuel pump (23) each cylinder of which supplies fuel to one of said combustion chambers (18).

4. The gas-turbine power plant of claim 3, wherein said piston-type compressor (2) is a modified Diesel engine and said fuel pump (23) is the fuel pump of said Diesel engine

5. The gas-turbine power plant of any one of the preceding claims, further comprising a turbocharger (12) driven by exhaust gas from said gas turbine (1) and supplying precompressed atmospheric air to the air intake of said piston-type compressor (2).

6. The gas-turbine power plant of claim 5, further including an air cooler (13) disposed between said turbocharger (12) and said piston-type compressor (2).

7. The gas-turbine power plant of any one of the preceding claims, wherein said piston-type compressor (2) is mechanically connected to said gas turbine (1) through a gearbox (4).

8. The gas-turbine power plant of claim 7, wherein said gas turbine (1) and/or said piston-type compressor (2) is connected to said gearbox (4) through a disengageable shaftcoupling clutch (7, 8).

9. The gas-turbine power plant of claim 7 or 8, wherein a power output shaft (5) of the plant is drivingly connected to said gearbox (4).

10. The gas-turbine power plant of claim 9, wherein said power output shaft (5) is provided with a propeller (19).

11. The gas-turbine power plant of any one of the preceding claims, wherein an electric generator (6) is connected to said gas turbine (1) through a kinetic shaft clutch (10).

12. The gas-turbine power plant of claim 11, wherein said generator (6) has a frequency stabilizing flywheel (22) on its shaft.

13. The gas-turbine power plant of any one of the preceding claims, wherein an engine (3) is mechanically connected to said gas turbine (1) and said piston-type compressor (2) through a disengageable shaft-coupling clutch (9), said engine forming the starting engine of said plant.

14. The gas-turbine power plant of claim 13, wherein said engine (3) is a Diesel engine.

15. The gas-turbine power plant of claim 13 or 14, wherein an auxiliary electric generator (17) is connected to said engine (3).

16. The gas-turbine power plant of any one of the claims 11 to 15 in connection with claim 7, wherein said electric generator (6) and/or said engine (3) is connected to said gas turbine (1) through said gearbox (4).

## Patentansprüche

1. Gasturbinentriebwerk mit:
- einer Gasturbine (1) mit mehreren Brennkammern (18),
- einem Luftverdichter, der mit der Gasturbine (1) mechanisch verbunden ist, um den Brennkammern (18) unter Druck stehende Verbrennungsluft zuzuführen, und
- einer Brennstoffquelle zum Zuführen von Brennstoff zu den Brennkammern (18),
**dadurch gekennzeichnet, dass** der Luftverdichter ein Kolbenverdichter (2) ist.

2. Gasturbinentriebwerk nach Anspruch 1, bei dem der Kolbenverdichter (2) mehrere Zylinder aufweist, die getrennt mit jeweils einer Brennkammer (18) der Gasturbine (1) verbunden sind.

3. Gasturbinentriebwerk nach Anspruch 1 oder 2, bei dem die Brennstoffquelle eine Kolbenbrennstoffpumpe (23) ist, deren jeder Zylinder einer der Brennkammern (18) Brennstoff zuführt.

4. Gasturbinentriebwerk nach Anspruch 3, bei dem der Kolbenverdichter (2) ein modifizierter Dieselmotor ist und die Brennstoffpumpe (23) die Brennstoffpumpe des Dieselmotors ist.

5. Gasturbinentriebwerk nach einem der vorhergehenden Ansprüche, ferner mit einem Turbolader (12), der durch Abgas von der Gasturbine (1) angetrieben wird und dem Lufteinlass des Kolbenverdichters (2) vorverdichtete Umgebungsluft zuführt.

6. Gasturbinentriebwerk nach Anspruch 5, ferner mit einem Luftkühler (13), der zwischen dem Turbolader (12) und dem Kolbenverdichter (2) angeordnet ist.

7. Gasturbinentriebwerk nach einem der vorhergehenden Ansprüche, bei dem der Kolbenverdichter (2) durch ein Getriebe (4) mit der Gasturbine (1) mechanisch verbunden ist.

8. Gasturbinentriebwerk nach Anspruch 7, bei dem die Gasturbine (1) und/oder der Kolbenverdichter (2) durch eine ausrückbare Wellenkupplung (7, 8) mit dem Getriebe (4) verbunden ist.

9. Gasturbinentriebwerk nach Anspruch 7 oder 8, bei dem eine Abtriebswelle (5) des Triebwerks mit dem Getriebe (4) in Antriebsverbindung steht.

10. Gasturbinentriebwerk nach Anspruch 9, bei dem die Abtriebswelle (5) mit einem Propeller (19) versehen ist.

11. Gasturbinentriebwerk nach einem der vorhergehenden Ansprüche, bei dem ein Stromgenerator (6) durch eine kinetische Wellenkupplung (10) mit der Gasturbine (1) verbunden ist.

12. Gasturbinentriebwerk nach Anspruch 11, bei dem der Generator (6) auf seiner Welle ein frequenzstabilisierendes Schwungrad (22) trägt.

13. Gasturbinentriebwerk nach einem der vorhergehenden Ansprüche, bei dem ein Motor (3) mit der Gasturbine (1) und dem Kolbenverdichter (2) durch eine ausrückbare Wellenkupplung (9) mechanisch verbunden ist, wobei der Motor den Anfahrmotor des Triebwerks bildet.

14. Gasturbinentriebwerk nach Anspruch 13, bei dem der Motor (3) ein Dieselmotor ist.

15. Gasturbinentriebwerk nach Anspruch 13 oder 14, bei dem ein Hilfsstromgenerator (17) mit dem Motor (3) verbunden ist.

16. Gasturbinentriebwerk nach einem der Ansprüche 11 bis 15 in Verbindung mit Anspruch 7, bei dem der Stromgenerator (6) und/oder der Motor (3) durch das Getriebe (4) mit der Gasturbine (1) verbunden sind.

## Revendications

1. Centrale électrique à turbine à gaz, comprenant:
- une turbine à gaz (1) ayant une pluralité de chambres de combustion (18),
- un compresseur d'air couplé mécaniquement à ladite turbine à gaz (1) pour fournir de l'air de combustion sous pression auxdites chambres de combustion (18), et
- une source de combustible pour fournir du combustible auxdites chambres de combustion (18),
**caractérisée en ce que** ledit compresseur d'air est un compresseur (2) du type à piston.

2. Centrale électrique à turbine à gaz selon la revendication 1, dans laquelle ledit compresseur (2) du type à piston comporte une pluralité de cylindres reliés chacun séparément à une chambre de combustion (18) de ladite turbine à gaz (1).

3. Centrale électrique à turbine à gaz selon la revendication 1 ou 2, dans laquelle ladite source de combustible est une pompe (23) à combustible du type à piston dont chaque cylindre fournit du combustible à l'une desdites chambres de combustion (18).

4. Centrale électrique à turbine à gaz selon la revendication 3, dans laquelle ledit compresseur (2) du type à piston est un moteur diesel modifié et ladite pompe (23) à combustible est la pompe à combustible dudit moteur diesel.

5. Centrale électrique à turbine à gaz selon l'une quelconque des revendications précédentes, comprenant en outre un turbocompresseur (12) entraîné par les gaz d'échappement de ladite turbine à gaz (1) et fournissant de l'air atmosphérique pré-comprimé à l'admission d'air dudit compresseur (2) du type à piston.

6. Centrale électrique à turbine à gaz selon la revendication 5, comprenant en outre un refroidisseur (13) d'air disposé entre ledit turbocompresseur (12) et ledit compresseur (2) du type à piston.

7. Centrale électrique à turbine à gaz selon l'une quelconque des revendications précédentes, dans laquelle ledit compresseur (2) du type à piston est couplé mécaniquement à ladite turbine à gaz (1) par l'intermédiaire d'un train d'engrenages (4).

8. Centrale électrique à turbine à gaz selon la revendication 7, dans laquelle ladite turbine (1) à gaz et/ou ledit compresseur (2) du type à piston sont couplés audit train d'engrenages (4) par l'intermédiaire d'un embrayage débrayable (7, 8) de couplage d'arbre.

9. Centrale électrique à turbine à gaz selon la revendication 7 ou 8, dans laquelle un arbre (5) de production de puissance de la centrale est accouplé de manière motrice audit train d'engrenages (4).

10. Centrale électrique à turbine à gaz selon la revendication 9, dans laquelle ledit arbre (5) de production de puissance est pourvu d'une hélice (19).

11. Centrale électrique à turbine à gaz selon l'une quelconque des revendications précédentes, dans laquelle un générateur électrique (6) est relié à ladite turbine à gaz (1) par l'intermédiaire d'un embrayage cinétique (10) d'arbre.

12. Centrale électrique à turbine à gaz selon la revendication 11, dans laquelle ledit générateur (6) a sur son arbre un volant (22) de stabilisation de fréquence.

13. Centrale électrique à turbine à gaz selon l'une quelconque des revendications précédentes, dans laquelle un moteur (3) est couplé mécaniquement à ladite turbine à gaz (1) et audit compresseur (2) du type à piston par l'intermédiaire d'un embrayage débrayable (9) de couplage d'arbre, ledit moteur constituant le moteur de démarrage de ladite centrale.

14. Centrale électrique à turbine à gaz selon la revendication 13, dans laquelle ledit moteur (3) est un moteur diesel.

15. Centrale électrique à turbine à gaz selon la revendication 13 ou 14, dans laquelle un générateur électrique auxiliaire (17) est couplé audit moteur (3).

16. Centrale électrique à turbine à gaz selon l'une quelconque des revendications 11 à 15 dépendant de la revendication 7, dans laquelle ledit générateur électrique (6) et/ou ledit moteur (3) est couplé à ladite turbine à gaz (1) par l'intermédiaire dudit train d'engrenages (4).
